# DEMANDE DE BREVET EUROPEEN

(11) **EP 3 506 471 A1**
(43) Date de publication de la demande: **03.07.2019**
(21) Numéro de dépôt: 18213222.5
(22) Date de dépôt: 17.12.2018
(51) Int. Cl.: H02K 23/30, H02K 3/28, H02K 3/51

(54) **ROTOR DE MACHINE ELECTRIQUE TOURNANTE ET PROCEDE DE FABRICATION ASSOCIE**

(30) Priorité: 02.01.2018 FR 1850003
(71) Demandeur: Valeo Systèmes d'Essuyage, 78322 Le Mesnil Saint Denis (FR)
(72) Inventeur: HERRADA, Jose-Luis, 78322 Le Mesnil Saint Denis (FR); AUBUGEAU, Quentin, 86108 Chatellerault (FR)
(74) Mandataire: Valeo Systèmes d'Essuyage

(57) **Abrégé**

La présente invention concerne un rotor (1) de machine électrique tournante comprenant :
- un corps (3) comprenant une âme centrale cylindrique (5) et une pluralité circonférentielle de bras (B1...B18) s'étendant radialement à partir de l'âme centrale cylindrique (5), le corps (3) étant destiné à être monté mobile autour d'un axe de rotation X,
- un bobinage réalisé par des enroulements de spires et formant au moins une série de bobines (C1...C9, C1'...C9', C1"...C9", C1'"...C9'"), une bobine (C1...C9, C1'...C9', C1"...C9", C1'"...C9'") comprenant un nombre prédéterminé de spires autour d'au moins deux bras (B1...B18) du corps, deux bobines (C1...C9, C1'...C9', C1"...C9", C1'"...C9'") adjacentes d'une série étant décalées angulairement l'une par rapport à l'autre avec un recouvrement partiel,
dans lequel le rotor (1) comprend au moins une boucle de maintien supplémentaire (S1, S1', S2, S2') enroulée autour d'au moins deux bras (B1...B18) dont l'un au moins est commun avec les bras (B1...B18) autour desquels est enroulée la dernière bobine (C9, C9', C9", C9'"), située radialement le plus à l'extérieur, d'au moins une série et dont l'un au moins est distinct des bras autour desquels est enroulée ladite dernière bobine (C9, C9', C9", C9'") de sorte que la, au moins une, boucle de maintien supplémentaire (S1, S1', S2, S2') recouvre partiellement les spires de ladite dernière bobine (C9, C9', C9", C9"').

## Description

La présente invention concerne une machine électrique tournante, notamment un moteur électrique destiné à être utilisé dans un véhicule automobile, par exemple dans un moto-réducteur et plus particulièrement une machine électrique tournante comprenant un rotor bobiné.

Il est connu d'utiliser des rotors bobinés dans certains moteurs électriques. Ces rotors bobinés comprennent généralement un corps, réalisé par un paquet de tôles, comprenant des bras autour desquels sont enroulées des spires pour former des bobines destinées à interagir avec les pôles du stator qui peuvent être réalisés par des aimants ou par des bobines. L'alimentation des bobines du rotor permet d'interagir avec les pôles du stator pour entraîner le rotor en rotation. L'alimentation du rotor est par exemple réalisée par des balais.

Les différentes bobines du rotor sont décalées angulairement les unes des autres et peuvent notamment se superposer. Dans ce cas, les spires de la dernière bobine sont enroulées et maintenues autour de l'extrémité des bras de sorte qu'il existe un risque non négligeable de décrochage d'une spire durant la durée de vie de la machine tournante pouvant conduire à un dysfonctionnement de cette dernière. En effet, il convient de limiter au maximum le diamètre du rotor de manière à limiter l'encombrement de la machine tournante (ce qui facilite son implémentation dans le véhicule), ce qui explique le fait qu'on ne peut pas augmenter la taille des bras pour éviter un décrochage des spires.

La présente invention vise donc à fournir une solution permettant d'éviter le décrochage des dernières spires d'un bobinage au niveau d'un rotor sans augmenter le diamètre du rotor.

A cet effet, la présente invention concerne un rotor de machine électrique tournante comprenant :
- un corps comprenant une âme centrale cylindrique et une pluralité circonférentielle de bras s'étendant radialement à partir de l'âme centrale cylindrique, le corps étant destiné à être monté mobile autour d'un axe de rotation X,
- un bobinage réalisé par des enroulements de spires et formant au moins une série de bobines, une bobine comprenant un nombre prédéterminé de spires autour d'au moins deux bras du corps, deux bobines adjacentes d'une série étant décalées angulairement l'une par rapport à l'autre avec un recouvrement partiel,
dans lequel le rotor comprend au moins une boucle de maintien supplémentaire enroulée autour d'au moins deux bras dont l'un au moins est commun avec les bras autour desquels est enroulée la dernière bobine, située radialement le plus à l'extérieur, d'au moins une série et dont l'un au moins est distinct des bras autour desquels est enroulée ladite dernière bobine de sorte que la, au moins une, boucle de maintien supplémentaire recouvre partiellement les spires de ladite dernière bobine.

Le rotor peut également comprendre l'un des aspects supplémentaires suivants :
La boucle de maintien supplémentaire est une spire supplémentaire de maintien d'au moins une série de bobines.

Le rotor peut comprend au moins deux séries de bobines disposées à 180° l'une par rapport à l'autre par rapport à l'axe de rotation X.

Une seule série de bobines comprend au moins une spire de maintien supplémentaire recouvrant partiellement les spires des dernières bobines des deux séries.

Les deux séries de bobines comprennent chacune au moins une spire de maintien supplémentaire.

La, au moins une, spire de maintien supplémentaire d'au moins une série de bobines est réalisée entre une pluralité de bras dont l'un au moins est un bras autour duquel est enroulée la dernière bobine de la série de bobines et l'un au moins est un bras autour duquel est enroulée la dernière bobine de l'autre série de bobines, la, au moins une, spire de maintien supplémentaire des séries de bobines recouvrant partiellement les spires des dernières bobines des séries de bobines.

La, au moins une, spire de maintien supplémentaire s'étend dans une direction sensiblement égal à un angle de 360° divisé par le nombre de pôles de la machine tournante par rapport à la direction des spires de la dernière bobine de la série, c'est-à-dire dans une direction sensiblement perpendiculaire à la direction des spires de la dernière bobine dans une machine comprenant quatre pôles.

La, au moins une, spire de maintien supplémentaire est enroulée autour d'une pluralité de bras du corps couvrant un angle sensiblement égal à 180°.

La, au moins une, spire de maintien supplémentaire est enroulée entre des bras du corps dont l'un est adjacent aux bras du corps autour desquels est enroulée la dernière bobine de la série et les autres bras sont communs aux bras du corps autour desquels est enroulée ladite dernière bobine.

La, au moins une, spire est enroulée dans le sens d'enroulement correspondant à une augmentation du couple moteur.

Les bras du corps ont une forme générale de T dont la base est dirigée vers l'axe de rotation X et dont l'extrémité libre forme deux retours saillants de retenue des spires.

Le rotor est configuré pour coopérer avec un stator de la machine électrique tournante comprenant un nombre de pôles supérieur ou égal à quatre.

L'angle couvert par les bras autour desquels est enroulée une bobine est sensiblement égal à 360° divisé par le nombre de pôles du stator de la machine électrique tournante.

Le corps comprend au moins dix bras.

Le corps comprend dix-huit bras, une bobine étant formée par des spires enroulées autour de quatre bras du corps.

Le nombre de spires des bobines est de 30 spires.

Le Rotor comprend un collecteur muni d'une pluralité de bornes et configuré pour alimenter les bobines du rotor et la boucle de maintien supplémentaire est un fil de liaison entre deux bornes du collecteur.

La présente invention concerne également une machine électrique tournante comprenant un rotor tel que décrit précédemment.

La présente invention concerne également un procédé de fabrication d'un rotor de machine électrique tournante comprenant un corps comprenant une âme centrale cylindrique et une alternance circonférentielle de bras s'étendant radialement à partir de l'âme centrale cylindrique, le corps étant destiné à être monté mobile autour d'un axe de rotation X, le procédé comprenant :
- une succession d'étapes d'enroulement d'un nombre prédéterminé de spires d'un bobinage autour d'au moins deux bras du corps pour former au moins une série de bobines, les étapes d'enroulement étant réalisées de sorte que deux bobines adjacentes d'une série sont enroulées autour d'au moins un bras commun et d'au moins un bras distinct, deux bobines adjacentes d'une série étant décalées angulairement l'une par rapport à l'autre avec un recouvrement partiel,
- une étape supplémentaire d'enroulement d'au moins une spire de maintien du bobinage autour d'au moins deux bras du corps dont au moins l'un des bras est commun avec les bras autour desquels est enroulée la dernière bobine d'une série, située radialement le plus à l'extérieur, et l'autre bras est distinct des bras autour desquels est enroulée la dernière bobine de la série, ladite, au moins une, spire de maintien recouvrant partiellement les spires de ladite dernière bobine.

Le procédé peut également comprendre l'aspect supplémentaire suivant :
Les étapes successives d'enroulement sont réalisées en double et simultanément à un premier emplacement du corps et à un deuxième emplacement du corps diamétralement opposé au premier emplacement de manière à former deux séries de bobines symétriques par rapport à l'axe de rotation X.

D'autres caractéristiques et avantages de l'invention ressortiront de la description suivante, donnée à titre d'exemple et sans caractère limitatif, en regard des dessins annexés sur lesquels :
- la figure 1 représente une vue schématique en perspective d'un corps de rotor,
- la figure 2 représente une vue schématique selon l'axe de rotation X d'un corps de rotor,
- la figure 3 représente un schéma d'un rotor bobiné selon un premier mode de réalisation,
- la figure 4 représente un schéma du rotor bobiné de la figure 3 vu du côté du collecteur,
- la figure 5 représente un schéma d'un rotor bobiné selon un deuxième mode de réalisation,
- la figure 6 représente un schéma d'un rotor bobiné selon un troisième mode de réalisation,
- la figure 7 représente un schéma d'un rotor bobiné selon un quatrième mode de réalisation,
- la figure 8 représente un schéma d'un rotor bobiné selon un cinquième mode de réalisation,
- la figure 9 représente un schéma d'un rotor bobiné selon un sixième mode de réalisation,
- la figure 10 représente un schéma d'un rotor bobiné selon un septième mode de réalisation,
- la figure 11 représente un schéma d'un rotor bobiné selon un huitième mode de réalisation,
- la figure 12 représente un schéma d'un rotor bobiné selon un neuvième mode de réalisation,
- La figure 13 représente un schéma d'un rotor bobiné selon un dixième mode de réalisation,
- la figure 14 représente un schéma d'un rotor bobiné selon un onzième mode de réalisation,
- la figure 15 représente un organigramme des différentes étapes de fabrication d'un rotor 18 encoches bobiné selon la présente invention,
- les figures 16 et 17 représentent des projections schématiques à plat d'un rotor selon une première et une deuxième configuration du bobinage,

Sur toutes les figures, les éléments identiques portent les mêmes numéros de référence.

Les réalisations suivantes sont des exemples. Bien que la description se réfère à un ou plusieurs modes de réalisation, ceci ne signifie pas nécessairement que chaque référence concerne le même mode de réalisation ou que les caractéristiques s'appliquent seulement à un seul mode de réalisation. De simples caractéristiques de différents modes de réalisation peuvent également être combinées ou interchangées pour fournir d'autres réalisations.

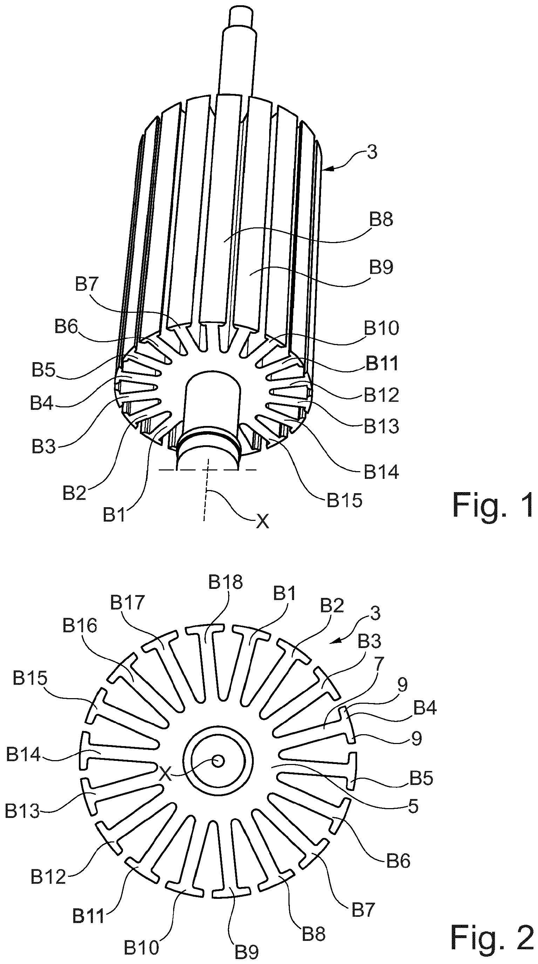

La figure 1 représente une vue schématique en perspective d'un corps 3 de rotor 1 d'une machine tournante telle qu'un moteur électrique. Dans le cadre de la présente invention, la machine tournante comprend au moins quatre pôles disposés au niveau du stator (non représenté). Les pôles sont par exemple réalisés par des aimants permanents ou des bobines. Le corps 3 a une forme générale cylindrique et est destiné à recevoir une ou plusieurs séries de bobines réparties sur son pourtour. Le corps 3 est destiné à être monté mobile autour d'un axe de rotation X correspondant à l'axe central du cylindre.

Le corps 3 comprend une âme centrale cylindrique 5 et une pluralité circonférentielle de bras, dix-huit dans le cas présent, notés B1, B2...B18 (les bras B16, B17 et B18 étant masqués sur la figure 1), c'est-à-dire une pluralité de bras disposés sur la circonférence de l'âme centrale cylindrique 5, s'étendant radialement à partir de l'âme centrale cylindrique 5. Les bras B1... B18 sont répartis régulièrement sur toute la circonférence de l'âme centrale cylindrique 5 et sont séparés par des encoches destinées à recevoir des enroulements de spires du bobinage. Bien entendu, l'invention ne se limite pas à une répartition régulière des bras B1...B18 du rotor 3. Dans le cas présent, le corps 3 comprend 18 bras mais l'invention ne se limite pas à ce nombre de bras mais à tout nombre, préférentiellement supérieur à 10. De plus, le nombre de pôles du moteur peut être différent de quatre.

Comme cela est mieux visible sur la figure 2 qui représente une vue selon l'axe de rotation X du corps 3, les bras B1...B18 du corps 3 ont par exemple une forme générale de T dont la base 7 est dirigée vers l'axe de rotation X et dont l'extrémité libre forme deux retours saillants 9 qui aident à la retenue des spires.

Le corps 3 est par exemple formé par un paquet de tôles assemblées entre elles, chaque tôle correspondant à une « tranche » du corps 3 comprenant une âme centrale cylindrique 5 et une pluralité de bras B1...B18. Cependant, d'autres types de corps 3, par exemple monobloc, sont également possibles.

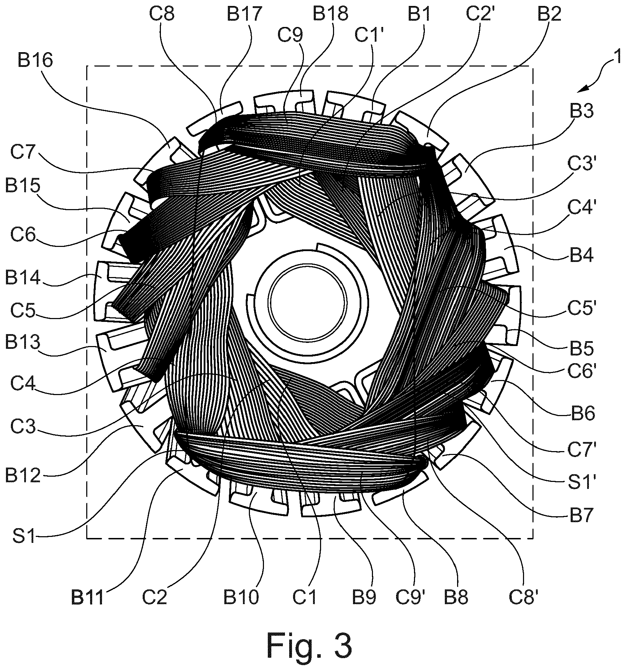

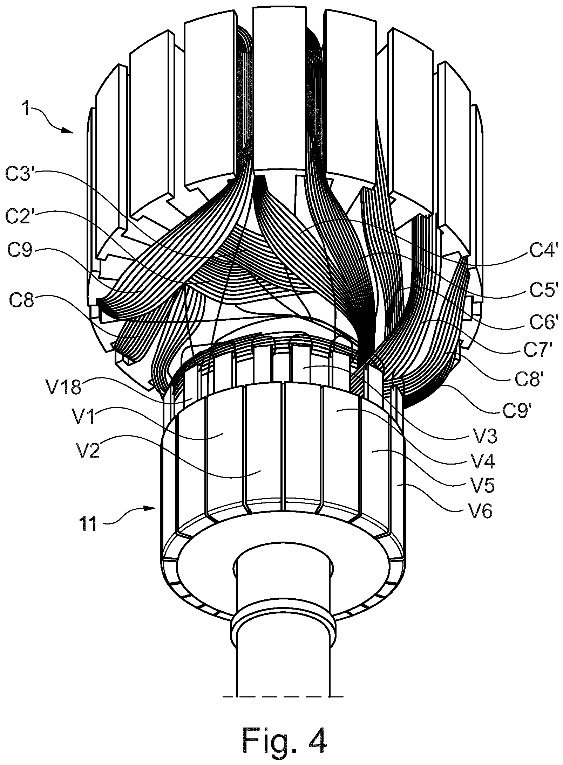

La figure 3 représente un schéma d'un rotor 1 dont le bobinage comprend deux séries de bobines C1...C9 et C1'...C9' réparties sur les bras B1...B18 du corps 3. Une bobine est réalisée par une pluralité de spires enroulées autour de deux bras B1...B18 du corps et réalisées à partir d'un seul fil. Le fil est par exemple un fil de cuivre. Le rotor 1 comprend également un collecteur 11 permettant l'alimentation des bobines comme représenté sur la figure 4. La figure 4 représente le rotor 1 de la figure 3 vu du côté du collecteur 11, les deux extrémités d'une bobine C1...C9' sont reliées respectivement à une borne prédéfinie d'un collecteur 11 de manière à permettre l'alimentation de la bobine au moment désiré pour permettre l'entraînement en rotation du rotor 1. Le collecteur 11 comprend par exemple dix-huit bornes notées V1...V18 sur lesquelles viennent frotter des balais (non représentés) pour assurer l'alimentation des bobines C1...C9'. Un premier balai correspond à une alimentation positive et un deuxième balai à une alimentation négative de sorte que lorsque le premier balai est en contact avec une première borne, par exemple V1 et le deuxième balai est en contact avec une deuxième borne, par exemple V5, les bobines reliées en série entre V1 et V5 sont alimentées. Il existe différentes configurations possibles concernant les branchements des bobines C1...C9' sur les bornes V1...V18 du collecteur 11 pour assurer le fonctionnement du moteur électrique.

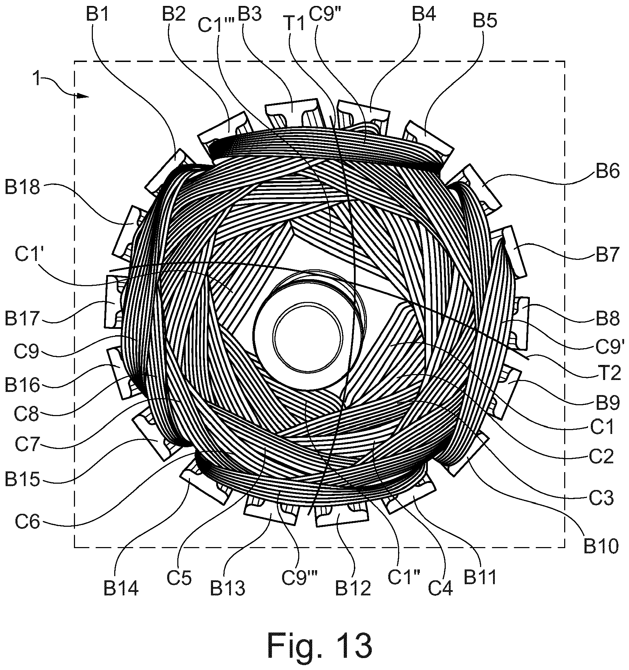

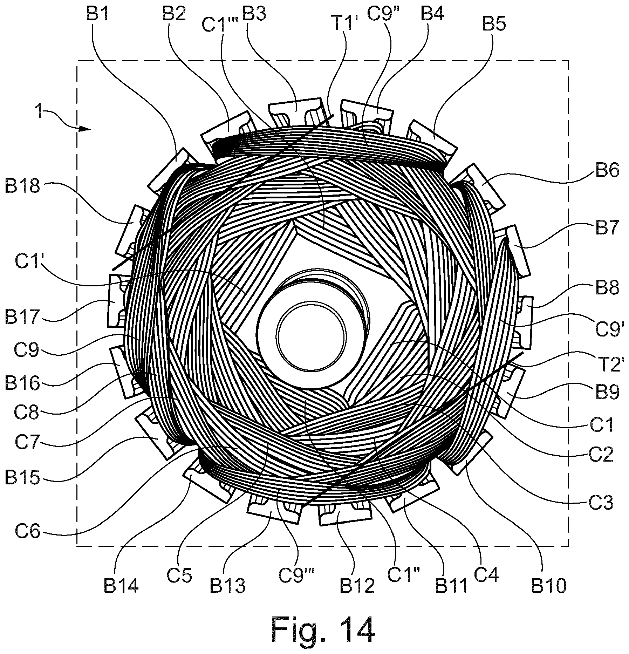

Cependant, il est à noter que la présente invention ne se limite pas à un rotor comprenant deux séries de bobines mais s'étend à des rotors 1 comprenant un nombre de séries des bobines différent, par exemple quatre séries de bobines disposées à 90° comme représenté sur les figures 13 et 14. Par soucis de clarté, certaines des bobines des figures 13 et 14 n'ont pas été référencées. Les bobines C1'...C9' de la deuxième série sont situées en regard des bobines de la première série C1...C9 comme dans le mode de réalisation de la figure 3 mais le rotor 1 comprend également une quatrième série C1"'...C9"' située en regard de la troisième série C1"...C9", les différentes séries étant disposées à 90° les unes des autres.

L'utilisation d'un rotor 1 comprenant deux séries de bobines diamétralement opposées permet d'obtenir un rotor 1 plus équilibré (par rapport à un rotor 1 comprenant une seule série de bobines) puisque les positions des bobines des deux séries sont symétriques par rapport à l'axe de rotation et ne créent donc pas de balourd supplémentaire.

Le nombre de séries de bobines dépend notamment du nombre de pôles de la machine tournante. Les différentes séries de bobines peuvent être réalisées simultanément si la machine réalisant les étapes d'enroulement comprend plusieurs bras d'enroulement, ce qui permet de former le bobinage du rotor 1 plus rapidement.

Les séries de bobines peuvent également être réalisées en alternance si la machine ne comprend qu'un seul bras d'enroulement des spires. Dans ce dernier cas, les premières bobines C1, C1', C1", C1"' de chacune des séries sont enroulées, puis les deuxièmes bobines C2, C2', C2", C2"' de chacune des séries et ainsi de suite jusqu'aux dernières bobines C9, C9', C9", C9"' de chacune des séries. Le nombre de séries de bobines dépend notamment du nombre de pôles. En général, le nombre de séries de bobines est égal à un ou au nombre de pôles ou au nombre de pôles divisé par deux. Ainsi, pour un moteur comprenant quatre pôles, le nombre de série de bobines est de un, deux ou quatre.

Dans le cas de la figure 3, les deux séries de bobines sont sensiblement identiques et sont disposés à 180° l'une de l'autre, c'est-à-dire qu'une bobine, par exemple la première bobine C1 de la première série est située en regard de la même bobine, la première bobine C1' dans notre exemple, de l'autre série. Dans le cas présent, chacune des séries forme un ensemble de neuf bobines notées respectivement C1, C2...C9 et C1', C2'...C9' pour la première et la deuxième série. Cependant, un nombre de bobines différent pour chaque série est également possible. De préférence, les différentes séries ont le même nombre de bobines pour assurer l'équilibre du rotor 1.

Une bobine est donc formée par un enroulement d'un nombre prédéterminé de spires, par exemple trente, autour d'au moins deux bras du corps. Le nombre de spires des différentes bobines est préférentiellement le même pour toutes les bobines C1...C9' d'une série.

Le nombre de bras autour desquels est enroulée une bobine est choisi pour être sensiblement égal au pas polaire ou légèrement inférieur. Le pas polaire correspond à un angle égal à 360° divisée par le nombre de pôles du moteur. Dans le cas présent, le moteur comprend quatre pôles, le pas polaire est donc égal à 90°. Le rotor 3 comprenant dix-huit bras, pour obtenir une bobine couvrant un angle de sensiblement 90°, il convient de choisir un nombre de bras égal à quatre ou cinq pour l'enroulement des spires et préférentiellement de quatre pour couvrir un angle inférieur au pas polaire.

Dans le cas de la figure 3, une bobine C1...C9' est donc formée par un enroulement de spires autour de quatre bras, c'est-à-dire que quatre bras du corps sont disposés au milieu des spires d'une bobine C1...C9', les enroulements étant réalisés dans les encoches adjacentes aux deux bras les plus éloignés parmi les quatre. Cependant, les bobines C1...C9' peuvent également être enroulées autour d'un nombre de bras différent de quatre.

Ainsi, les spires formant la bobine C1 sont enroulées autour des bras B9, B10, B11 et B12 tandis que les spires de la bobine suivante C2 sont enroulées autour des bras B10, B11, B12 et B13 (décalage d'un bras ou 20° entre deux bobines adjacentes d'une série). Les spires de la bobine C2 recouvrent donc les spires de la bobine C1 au niveau des bras B10, B11 et B12. Ainsi, deux bobines adjacentes d'une série sont décalées angulairement l'une par rapport à l'autre avec un recouvrement partiel. De plus, il est à noter que le sens d'enroulement des spires est le même pour les différentes bobines d'une série (enroulement dans un sens horaire ou antihoraire pour toutes les bobines de la série). Ce sens est également le même pour les différentes bobines de différentes séries. Dans le cas présent, le décalage entre deux bobines adjacentes d'une série correspond au décalage d'un bras, ce qui correspond à 20°. Du fait du recouvrement partiel, additionné à la présence de deux séries disposées à 180° l'une de l'autre dans le présent cas, les spires sont positionnées de plus en plus près de la périphérie du rotor 1 et des retours saillants 9 des bras B1...B18.

Afin d'éviter un décrochage des spires de la dernière bobine d'une série, ici les bobines C9 et C9', c'est-à-dire la bobine de la série radialement la plus à l'extérieur, au moins une boucle de maintien supplémentaire est enroulée autour d'au moins deux bras du corps dont l'un au moins est un des bras autour desquels est enroulée la dernière bobine de la série et dont l'un au moins est distinct des bras autour desquels est enroulée ladite dernière bobine.

Selon un premier mode de réalisation, la boucle de maintien correspond à une spire de maintien supplémentaire d'une des séries de bobines C1...C9'. Ainsi, la, au moins une, spire de maintien supplémentaire recouvre partiellement les spires de la dernière bobine C9, C9'. La spire de maintien supplémentaire peut être enroulée dans le même sens ou dans un sens différent du sens d'enroulement (horaire ou antihoraire) des spires des bobines de la série. La ou les spires de maintien supplémentaires sont enroulées dans la continuité de la dernière bobine de la série de sorte que si la dernière bobine doit être connectée à une première et une deuxième bornes prédéfinies du collecteur 11, la première extrémité de la dernière bobine est reliée à la première borne et l'extrémité de la ou des spires supplémentaires est reliée à la deuxième borne.

Dans le cas de la figure 3, le bobinage comprend une spire de maintien supplémentaire qui s'étend sensiblement perpendiculairement à la direction des spires de la dernière bobine C9, C9'. En effet, la dernière bobine C9 est enroulée autour des bras B17, B18, B1 et B2 et la spire de maintien supplémentaire Si est enroulée autour des bras B11, B12, B13, B14, B15, B16 et B17. Une spire de maintien s'étendant dans une direction sensiblement perpendiculaire à la direction des spires de la dernière bobine C9 permet un maintien efficace des spires de la dernière bobine C9.

De plus, dans le cas d'un rotor comprenant deux séries des bobines comme dans le cas de la figure 3, la spire supplémentaire est enroulée de préférence de manière à venir recouvrir partiellement les deux dernières bobines C9 et C9'. La bobine C9' est enroulée autour des bras B8, B9, B10 et B11 et la dernière spire S1' de la deuxième série de bobines est enroulée autour des bras B2, B3, B4, B5, B6, B7 et B8. Ainsi, les spires supplémentaires Si et S1' recouvrent chacune partiellement les dernières bobines C9 et C9' et collaborent donc au maintien en position des spires des dernières bobines C9 et C9'. De manière préférentielle, les spires supplémentaires Si et S1' recouvrent respectivement une première et une deuxième portions des dernières bobines C9, C9' correspondant par exemple à un côté et à l'autre côté de la dernière bobine C9, C9' pour optimiser le maintien des dernières bobines C9, C9'.

Alternativement, seule l'une des séries de bobines comprend une ou des spires supplémentaires et cette ou ces spires supplémentaires recouvrent partiellement les spires des dernières bobines des deux séries de bobines.

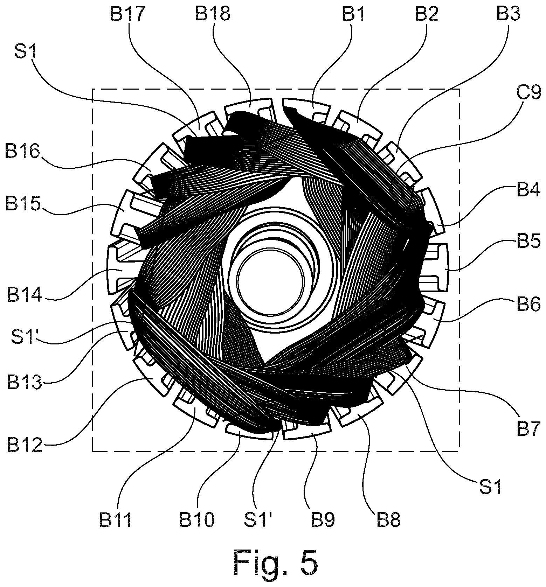

Les figures 5 à 10 représentent d'autres configurations possibles pour la spire de maintien supplémentaire. Dans toutes ces configurations, les bobines C1...C9' sont positionnées de la même manière que sur la figure 3 même si le numéro des bras B1...B18 autour desquels sont enroulées les bobines C1...C9' peut différer.

La figure 5 représente une configuration dans laquelle la spire de maintien supplémentaire est enroulée autour de quatre bras du corps 3. Ainsi, la dernière bobine C9 est enroulée autour des bras B1, B2, B3 et B4 et la spire de maintien supplémentaire Si associée à cette dernière bobine C9 et schématisée par un trait s'étend entre les bras B16, B17, B18 et B1. Alternativement, la spire de maintien supplémentaire Si peut également s'étendre entre les bras B4, B5, B6 et B7 comme schématisé par le trait en pointillés.

Symétriquement, pour l'autre série de bobines, la dernière bobine C9' est enroulée autour des bras B10, B11, B12 et B13 et la spire de maintien supplémentaire S1' associée à cette dernière bobine C9' est enroulée autour des bras B13, B14, B15 et B16 ou autour des bras B7, B8, B9 et B10.

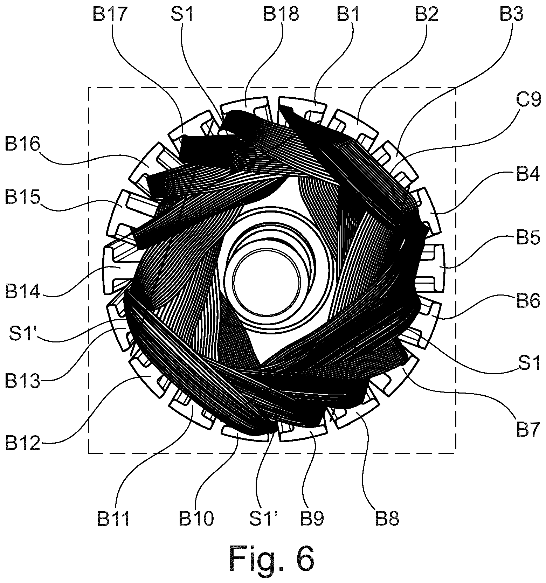

La figure 6 représente une configuration dans laquelle la spire de maintien supplémentaire est enroulée autour de cinq bras du corps 3. Ainsi, la dernière bobine C9 est enroulée autour des bras B1, B2, B3 et B4 et la spire de maintien supplémentaire si schématisée par un trait s'étend entre les bras B15, B16, B17, B18 et B1. Alternativement, la spire de maintien supplémentaire si peut également s'étendre entre les bras B4, B5, B6, B7 et B8 comme schématisé par le trait en pointillés.

Symétriquement, pour l'autre série de bobines, la dernière bobine C9' est enroulée autour des bras B10, B11, B12 et B13 et la spire de maintien supplémentaire est enroulée autour des bras B12, B13, B14, B15 et B16 ou autour des bras B7, B8, B9, B10 et B11.

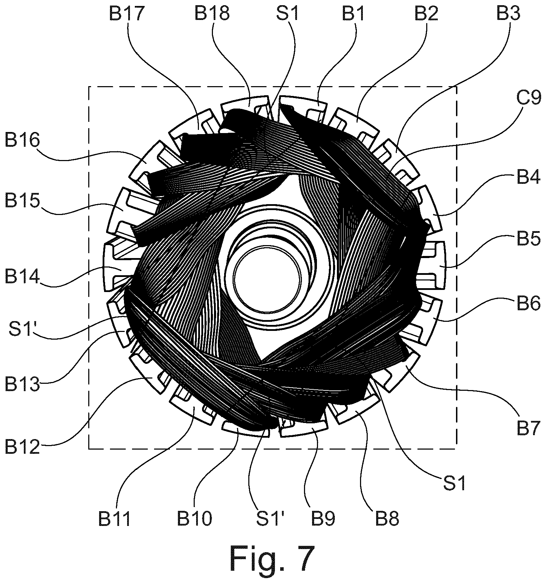

La figure 7 représente une configuration dans laquelle la spire de maintien supplémentaire est enroulée autour de six bras du corps 3. Ainsi, la dernière bobine C9 est enroulée autour des bras B1, B2, B3 et B4 et la spire de maintien supplémentaire si schématisée par un trait s'étend entre les bras B14, B15, B16, B17, B18 et B1. Alternativement, la spire de maintien supplémentaire si peut également s'étendre entre les bras B4, B5, B6, B7, B8 et B9 comme schématisé par le trait en pointillés.

Symétriquement, pour l'autre, série des bobines, la dernière bobine C9' est enroulée autour des bras B10, B11, B12 et B13 et la spire de maintien supplémentaire est enroulée autour des bras B11, B12, B13, B14, B15 et B16 ou autour des bras B7, B8, B9, B10, B11 et B12.

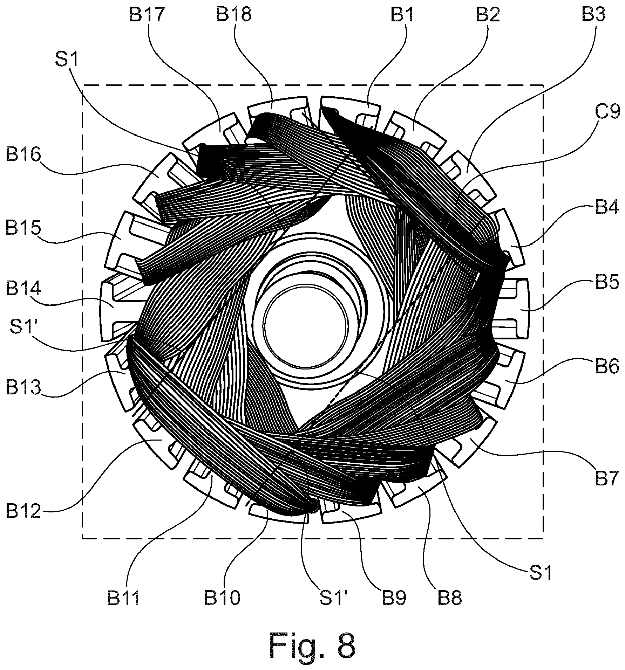

La figure 8 représente une configuration dans laquelle la spire de maintien supplémentaire est enroulée autour de sept bras du corps 3. Ainsi, la dernière bobine C9 est enroulée autour des bras B1, B2, B3 et B4 et la spire de maintien supplémentaire si schématisée par un trait s'étend entre les bras B13, B14, B15, B16, B17, B18 et B1. Alternativement, la spire de maintien supplémentaire si peut également s'étendre entre les bras B4, B5, B6, B7, B8, B9 et B10 comme schématisé par le trait en pointillés.

Pour l'autre série des bobines, les solutions d'enroulement pour la spire de maintien supplémentaire sont les mêmes que pour la première série de bobines. On se retrouve donc avec deux spires de maintien supplémentaires correspondant aux deux positions décrites.

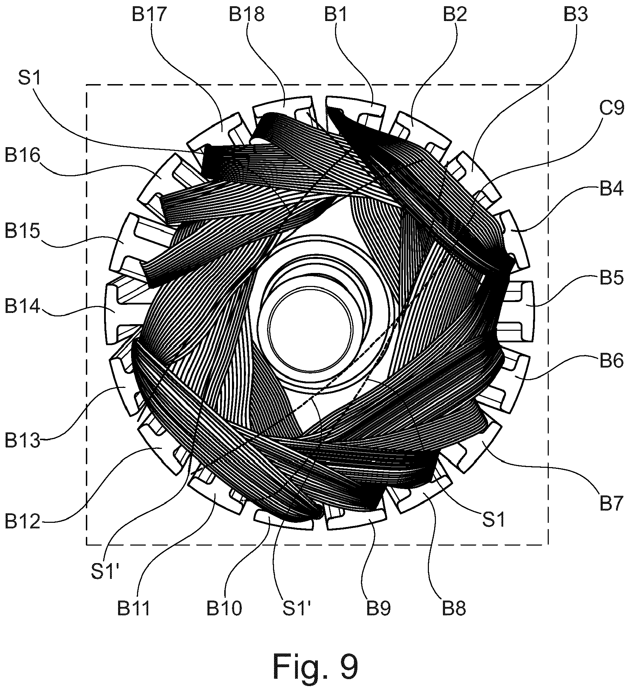

La figure 9 représente une configuration dans laquelle la spire de maintien supplémentaire est enroulée autour de huit bras du corps 3. Ainsi, la dernière bobine C9 est enroulée autour des bras B1, B2, B3 et B4 et la spire de maintien supplémentaire si schématisée par un trait s'étend entre les bras B13, B14, B15, B16, B17, B18, B1 et B2. Alternativement, la spire de maintien supplémentaire si peut également être enroulée autour des bras B4, B5, B6, B7, B8, B9, B10 et B11 comme schématisé par le trait en pointillés. Alternativement encore, la spire de maintien supplémentaire si peut être enroulée autour des bras B12, B13, B14, B15, B16, B17, B18 et B1 ou bien encore autour des bras B3, B4, B5, B6, B7, B8, B9 et B10.

Pour l'autre série des bobines les solutions d'enroulement pour la spire de maintien supplémentaire sont les mêmes que pour la première série de bobines. On se retrouve donc avec deux spires de maintien supplémentaires correspondant à deux des positions décrites.

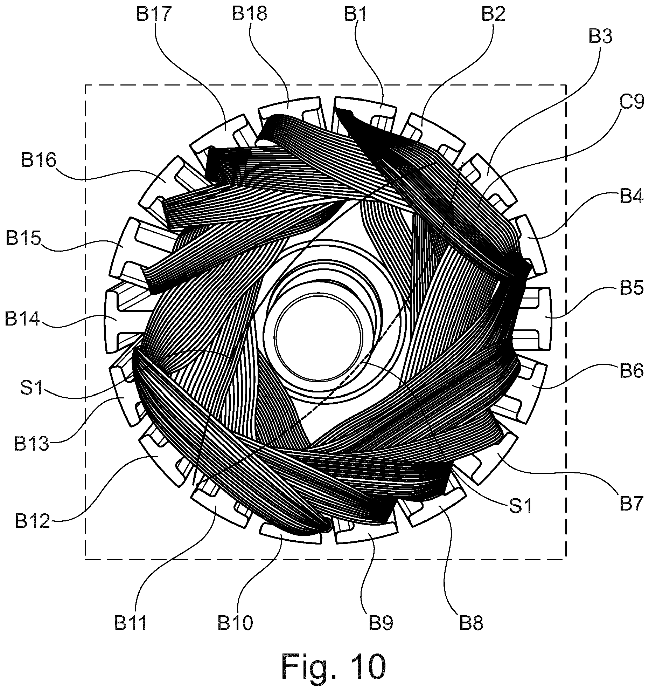

La figure 10 représente une configuration dans laquelle la spire de maintien supplémentaire est enroulée autour de neuf bras du corps 3. Ainsi, la dernière bobine C9 est enroulée autour des bras B1, B2, B3 et B4 et la spire de maintien supplémentaire si schématisée par un trait s'étend entre les bras B12, B13, B14, B15, B16, B17, B18, B1 et B2. Alternativement, la spire de maintien supplémentaire si peut également être enroulée autour des bras B3, B4, B5, B6, B7, B8, B9, B10 et B11 comme schématisé par le trait en pointillés.

Pour l'autre série des bobines, les solutions d'enroulement pour la spire de maintien supplémentaire sont les mêmes que pour première série de bobines. On se retrouve donc avec deux spires de maintien supplémentaires correspondant aux deux positions décrites.

Alternativement, dans le cas de la figure 10, une seule spire de maintien supplémentaire selon l'une des deux positions décrites peut être utilisée pour maintenir les deux dernières bobines des deux séries C9 et C9'.

Il est également à noter que la présente invention ne se limite pas aux configurations décrites mais s'étend à toutes configurations comprenant au moins une spire de maintien supplémentaire recouvrant partiellement les spires de la dernière bobine C9, C9' pour éviter leur décrochage lors de l'utilisation de la machine électrique tournante. Des caractéristiques de l'un des modes de réalisation peuvent être combinées avec des caractéristiques d'un autre mode de réalisation, Ainsi, la spire supplémentaire Si associée à la bobine C9 peut être enroulée autour de quatre bras comme représenté sur la figure 4 tandis que la spire supplémentaire S1' associée à la bobine C9' peut être enroulée autour de cinq bras comme représenté sur la figure 5.

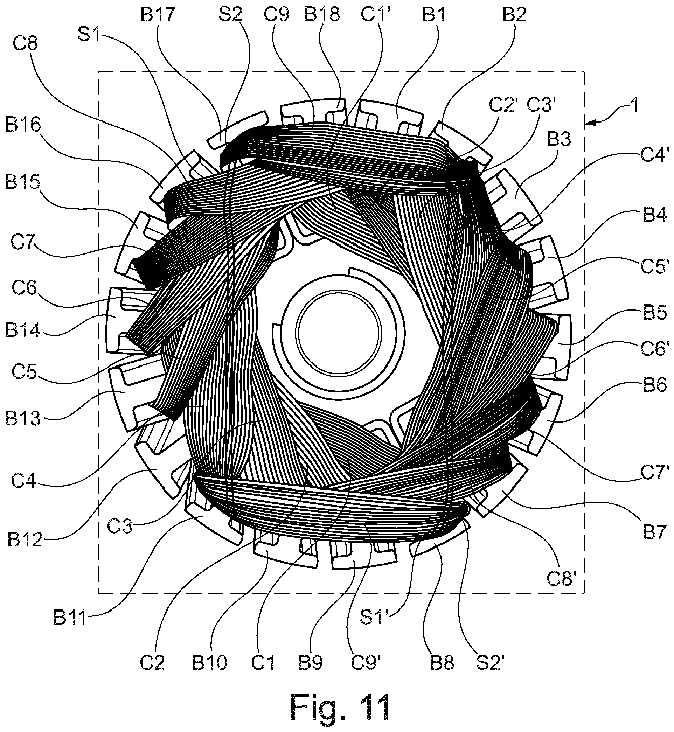

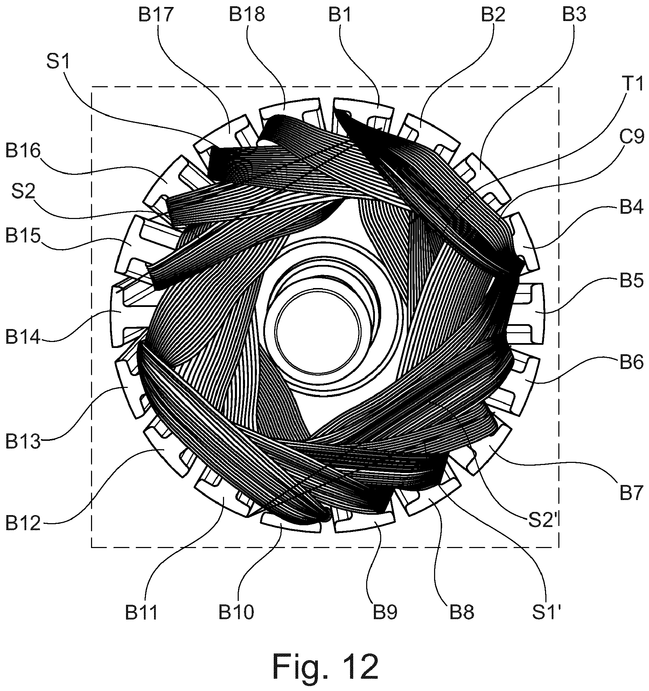

Les séries de bobines peuvent également comprendre plusieurs spires de maintien supplémentaires par exemple deux spires de maintien supplémentaires comme représenté sur la figure 11 sur laquelle les deux spires supplémentaires sont notées Si et S2. Dans cet exemple, les deux spires S1 et S2 sont enroulées autour des mêmes bras et dans le même sens d'enroulement cependant, il est également possible d'avoir une première spire supplémentaire dans une première position et une deuxième spire supplémentaire selon une deuxième position différente de la première comme représenté sur la figure 12. Ainsi, les spires supplémentaires peuvent prendre l'une des positions décrites à partir des figures 4 à 9 ainsi que d'autres positions permettant d'éviter le décrochage des spires de la dernière bobine C9, C9'. Le nombre de spires supplémentaires peut également être supérieur à deux. De plus, comme pour le mode de réalisation précédemment comprenant une seule spire de maintien supplémentaire, seule(s) la ou les spire(s) de maintien supplémentaire(s) de l'une des séries de bobines peu(ven)t être utilisée(s) pour maintenir les spires des dernières bobines C9, C9' des séries. Comme indiqué précédemment, on peut également avoir un rotor comprenant un nombre de série de bobines supérieur à deux, par exemple quatre séries disposées à 90°. Dans ce cas, la ou les spires supplémentaires peuvent recouvrir partiellement les spires des dernières bobines de deux séries.

Comme indiqué précédemment, le nombre de séries de bobines du rotor 1 ne se limite pas nécessairement à une ou deux mais peut aussi être plus élevé. La figure 13 représente un rotor 1 comprenant quatre séries de bobines notées respectivement C1...C9, C1'...C9', C1"...C9" et C1"'...C9"' disposées à 90°. Chaque bobine C1...C9"' est enroulée autour de quatre bras B1...B18 du rotor 1. Chaque série de bobines comprend neuf bobines et les bobines adjacentes d'une série sont décalées angulairement avec un recouvrement partiel comme pour les réalisations décrites précédemment. Les bobines C1'...C9' de la deuxième série sont respectivement diamétralement opposées par rapport aux bobines de la première série C1...C9 tandis que la bobines de la quatrième série C1"'...C9"' sont respectivement diamétralement opposées aux bobines de la troisième série C1"...C9". De plus, la ou les spires supplémentaires peuvent être disposées de manière à recouvrir au moins partiellement les spires des dernières bobines de deux des séries de bobines.

Dans le cas de la figure 13, une ou plusieurs spires supplémentaires de maintien peuvent être enroulées autour des bras autour desquels sont enroulées les spires des dernières bobines des séries diamétralement opposées comme représenté par les traits T1 et T2.

Alternativement, une ou plusieurs spires supplémentaires de maintien peuvent être enroulées autour des bras autour desquels sont enroulées les spires des dernières bobines de deux séries adjacentes comme représenté par les traits T1' et T2' sur la figure 14 dont le bobinage est par ailleurs identique au bobinage de la figure 13.

D'autres emplacements de la ou des spires supplémentaires permettant le maintien des spires des dernières bobines des différentes séries sont également possibles.

Selon un deuxième mode de réalisation, la boucle de maintien supplémentaire est réalisée par un fil de liaison destiné à relier deux des bornes V1...V18 du collecteur 11. En effet, comme indiqué précédemment, les bobines C1...C9'" sont reliées aux bornes du collecteur 11 pour permettre leur alimentation. Toutefois, dans le cas des moteurs électriques 1 comprenant quatre pôles ou plus avec seulement deux balais, on utilise des courts-circuits pour alimenter les bobines de tous les pôles. Ces courts-circuits sont des liaisons entre les bornes V1...V18 du collecteur 11 pour lesquelles deux balais vont fournir la même alimentation au même moment. Par exemple, dans le cas d'un moteur comprenant quatre balais disposés à 90° les uns des autres, les deux balais diamétralement opposés fournissent la même tension, il est donc possible de supprimer l'un de ces deux balais et de relier les bornes du collecteur 11 diamétralement opposées par des fils conducteurs de liaison aussi appelé « straps ».

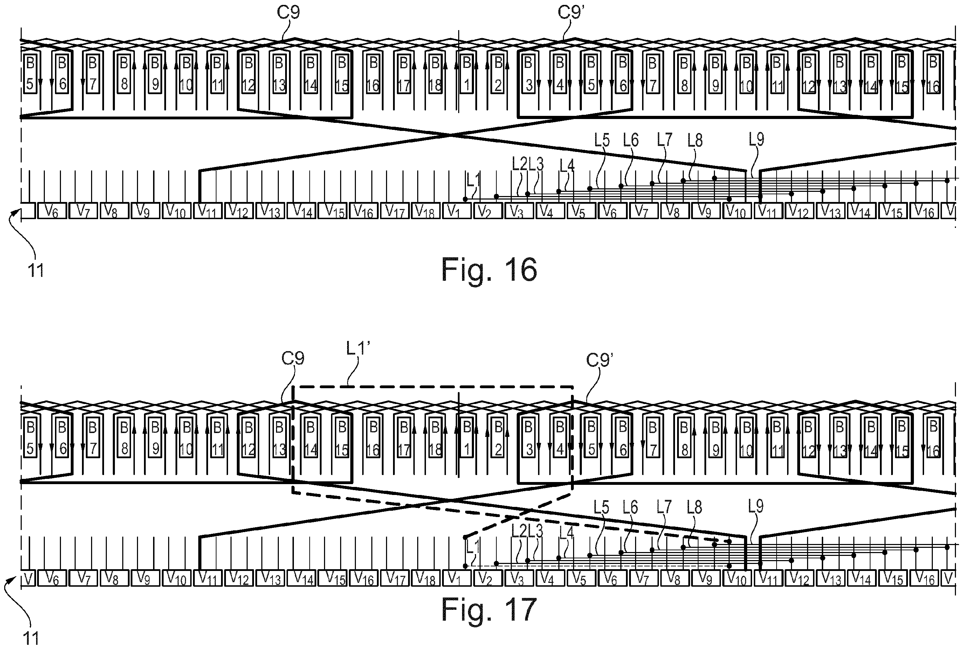

La figure 16 représente une projection à plat d'un rotor 3. La partie haute de la figure représente les bras B1...B18 du rotor 3 et la partie basse représente les bornes V1...V18 du collecteur 11. L'emplacement des spires des bobines sont représentées par les traits fléchés, la flèche indiquant le sens d'enroulement des spires. Cependant, il est à noter que les bobines ne sont représentées que partiellement (les connections vers les bornes du collecteur 11 ne sont représentées que pour les dernières bobines C9 et C9'). Dans le cas de la figure 16, la dernière bobine C9 de la première série est enroulée autour des bras B12, B13, B14 et B15 et la dernière bobine C9' de la deuxième série est enroulée autour des bras B3, B4, B5 et B6. De plus les deux dernières bobines C9 et C9' sont reliées en série entre les bornes V10 et V11 du collecteur 11 (les bobines équivalentes (premières , deuxièmes...) des séries sont toutes reliées en série entre deux bornes du collecteur 11). Il est à noter que les bobines C1...C9' peuvent également être reliées en parallèle entre deux bornes du collecteur 11.

Par ailleurs, le rotor 3 comprend des fils de liaison L1, L2...L9 reliant les bornes opposées du collecteur 11. Le fil de liaison L1 relie les bornes V1 à V10, le fil de liaison L2 relie les bornes V2 à V11...le fil de liaison L9 relie les bornes V9 à V18. Les fils de liaison permettent de réduire le nombre de balais utilisés.

Ainsi, avec une telle configuration, il est possible de faire passer au moins un de ces fils de liaison L1...L9 autour d'au moins deux bras du rotor de manière à recouvrir au moins partiellement les spires de la dernière bobine C9, C9' d'une ou plusieurs séries de manière à maintenir ces spires en position. Une telle réalisation est représentée sur la figure 17 par le fil de liaison L1' (représenté en pointillés), qui remplace alors le fil L1 (représenté également en pointillés). Le fil de liaison L1' passe entre les bras B4 et B5 de manière à recouvrir les spires de la dernière bobine C9' et entre les bras B13 et B14 de manière à recouvrir les bras de la dernière bobine C9. Il est évidemment possible d'utiliser d'autres positionnements du fil de liaison L1' tant que ces positionnements permettent un recouvrement partiel des spires d'au moins une des dernières bobines C9, C9'. Le fil de liaison L1' relie les bornes V1 et V10 du collecteur comme le fil de liaison L1 de la figure 16. Les autres fils de liaison L2...L9 demeurent identiques aux fils de liaison L2...L9 de la figure 16. Cependant, il est possible de réaliser des boucles de maintien des spires des dernières bobines C9, C9' en utilisant plusieurs fils de liaison.

De plus, selon une réalisation alternative non représentée, la boucle formée par le fil de liaison L1' peut former deux enroulements autour d'au moins deux bras, les deux enroulements étant bobinés en sens inverse l'un de l'autre afin de compenser la tension induite due aux défauts de symétrie de la boucle formée par le fil de liaison L1'. De préférence, la ou les boucles de maintien sont enroulées autour d'un nombre de bras B1...B18 du rotor 1 couvrant un angle sensiblement égal à deux pas polaire, c'est-à-dire entre huit et dix bras B1...B18 dans le cas d'un moteur électrique comprenant quatre pôles et un rotor 1 comprenant dix-huit bras B1...B18.

La boucle de maintien peut également être formée par tout fil ou élément recouvrant au moins partiellement les spires de la dernière bobine d'au moins une série et pouvant être fixé au collecteur 11 à ses extrémités de manière à maintenir les spires de la dernière bobine en position. La fixation n'est pas limitée à une fixation par soudure mais à tout type de fixation connue de l'homme du métier.

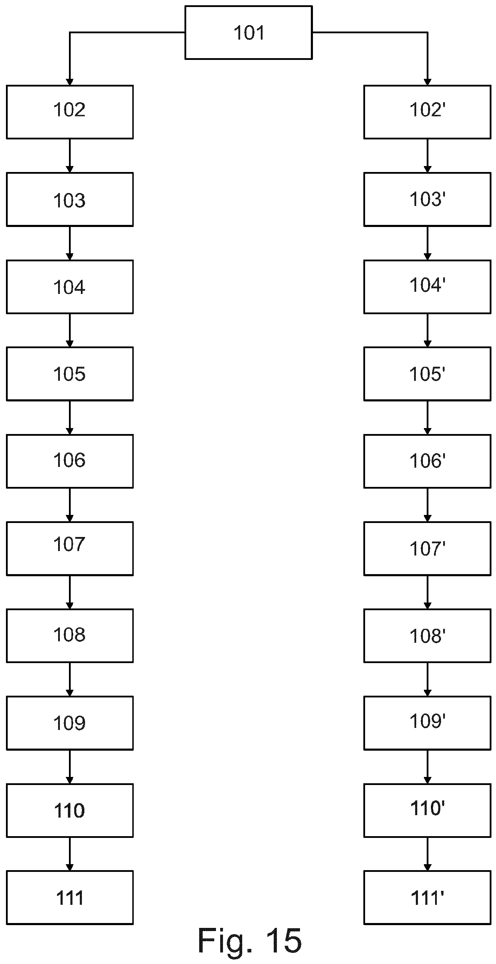

La figure 15 représente les différentes étapes de la fabrication du rotor 1.

La première étape 101 concerne la fabrication du corps 3. Comme indiqué précédemment, ce corps 3 peut être réalisé à partir d'un paquet de tôles fixées entre elles. La première étape comprend par exemple une première sous-étape de découpe des tôles à la forme désirée, notamment en fonction du nombre de bras du corps 3 et une deuxième sous-étape de fixation des tôles entre elles, par exemple par agrafage, soudure ou collage.

Le procédé comprend ensuite une succession d'étapes 102 à 110, pour la formation du bobinage, chaque étape correspondant à un enroulement d'un nombre prédéterminé, par exemple 30, de spires autour d'une pluralité de bras pour former une bobine C1...C9'". Si le bobinage ne comprend qu'une série de bobines, deux étapes d'enroulement successives sont réalisées autour d'au moins un bras commun et d'au moins un bras distinct de sorte que deux bobines adjacentes sont décalées angulairement l'une par rapport à l'autre avec un recouvrement partiel. Les différents enroulements correspondant aux différentes bobines se faisant dans le même sens d'enroulement. Ainsi, l'étape 102 correspond par exemple à la formation d'une bobine Ci autour des bras B9, B10, B11 et B12 (comme représenté sur la figure 3) et l'étape 103 correspond par exemple à la formation de la bobine C2 autour des bras B10, B11, B12 et B13. Les spires de la bobine C2 recouvrent donc les spires de la bobine Ci au niveau des bras B10, B11 et B12.

De plus, dans le cas où le rotor 1 comprend plusieurs séries de bobines, notamment deux séries comme dans le cas du rotor de la figure 3, le procédé comprend une deuxième succession d'étapes 102' à 110' qui peuvent être réalisées respectivement simultanément aux étapes 102 à 110. L'étape 102' correspond alors à la formation de la bobine C1' autour des bras B18, B1, B2 et B3 (comme représenté sur la figure 3) et l'étape 103' correspond alors à la formation de la bobine C2' autour des bras B1, B2, B3 et B4. Les spires de la bobine C2' recouvrent donc les spires de la bobine C1' au niveau des bras B1, B2 et B3. La réalisation de plusieurs séries de bobines simultanément permet de réduire le temps nécessaire à la fabrication du bobinage du rotor 1 mais nécessite une machine comprenant plusieurs bras d'enroulement de spires.

Alternativement, les étapes 102' à 110' peuvent être décalées temporellement par rapport aux étapes 102 à 110.

De plus, plusieurs séries de bobines, par exemple les deux séries de bobines de la figure 3, peuvent être réalisées avec une machine comprenant un seul bras d'enroulement. Dans ce cas, la formation des bobines des différentes séries se fait en alternance, le procédé comprend l'étape 102 de formation de la première bobine de la première série, puis l'étape 102' de formation de la première bobine de la deuxième série, puis l'étape 103 de formation de la deuxième bobine de la première série, puis l'étape 103' de formation de la deuxième bobine de la deuxième série et ainsi de suite pour l'ensemble des bobines. Le positionnement des bobines sur le corps de rotor reste le même qu'avec deux séries de bobines réalisées simultanément par deux bras d'enroulement. De la même manière, il est possible d'obtenir un nombre de séries de bobines plus important, par exemple quatre séries comme sur les figures 13 et 14.

Le procédé comprend également une étape 111 d'enroulement d'au moins une spire de maintien supplémentaire telle que décrite précédemment. Le nombre de spires supplémentaires est par exemple d'une spire Si qui est par exemple enroulée selon une direction sensiblement perpendiculaire aux spires de la dernière bobine formée à l'étape 110. Le sens d'enroulement (ou sens de bobinage) de la, au moins une, spire supplémentaire est préférentiellement dans le sens contraire de la dernière bobine.

De la même manière, une étape 111' peut aussi être réalisée pour former une (ou plusieurs) spire(s) supplémentaire(s) S1' associée(s) à la deuxième série de bobines. Les étapes 111 et 111' peuvent être simultanées dans le cas d'une machine comprenant deux bras d'enroulement.

Les spires supplémentaires Si et S1' sont par exemple disposées de manière à recouvrir partiellement les spires des dernières bobines C9 et C9' des deux séries.

Dans le cas d'un rotor 1 comprenant quatre séries de bobines, les spires supplémentaires (T1, T2, T1' et T2' sur les figures 13 et 14) peuvent être disposées de manière à recouvrir partiellement les spires des dernières bobines C9, C9', C9", C9'" de deux séries.

Ainsi, l'utilisation d'au moins une spire supplémentaire de maintien permet d'éviter un décrochement des spires de la dernière bobine d'une série, ce qui permet de garder un rotor de diamètre réduit tout en assurant un fonctionnement correcte du moteur électrique. De plus, une spire supplémentaire peut être utilisée pour maintenir les spires de deux dernières bobines dans le cas où le rotor comprend plusieurs séries de bobines.

## Revendications

1. Rotor (1) de machine électrique tournante comprenant :
- un corps (3) comprenant une âme centrale cylindrique (5) et une pluralité circonférentielle de bras (B1...B18) s'étendant radialement à partir de l'âme centrale cylindrique (5), le corps (3) étant destiné à être monté mobile autour d'un axe de rotation X,
- un bobinage réalisé par des enroulements de spires et formant au moins une série de bobines (C1...C9, C1'...C9', C1"...C9", C1'"...C9'"), une bobine (C1...C9, C1'...C9', C1"...C9", C1'"...C9'") comprenant un nombre prédéterminé de spires autour d'au moins deux bras (B1...B18) du corps, deux bobines (C1...C9, C1'...C9', C1"...C9", C1'"...C9'") adjacentes d'une série étant décalées angulairement l'une par rapport à l'autre avec un recouvrement partiel,
**caractérisé en ce que** le rotor comprend au moins une boucle de maintien supplémentaire (S1, S1', S2, S2') enroulée autour d'au moins deux bras (B1...B18) dont l'un au moins est commun avec les bras (B1...B18) autour desquels est enroulée la dernière bobine (C9, C9', C9", C9'"), située radialement le plus à l'extérieur, d'au moins une série et dont l'un au moins est distinct des bras autour desquels est enroulée ladite dernière bobine (C9, C9', C9", C9'") de sorte que la, au moins une, boucle de maintien supplémentaire (S1, S1', S2, S2') recouvre partiellement les spires de ladite dernière bobine (C9, C9', C9", C9'").

2. Rotor (1) selon la revendication 1 dans lequel la boucle de maintien supplémentaire est une spire de maintien supplémentaire (S1, S1', S2, S2') d'au moins une série de bobines.

3. Rotor (1) selon la revendication 2 comprenant deux séries de bobines disposées à 180° l'une par rapport à l'autre par rapport à l'axe de rotation X.

4. Rotor (1) selon la revendication 3 dans lequel une seule série de bobines comprend au moins une spire de maintien supplémentaire (S1, S1', S2, S2') recouvrant partiellement les spires des dernières bobines (C9, C9', C9", C9'") des deux séries de bobines.

5. Rotor (1) selon la revendication 3 dans lequel les deux séries de bobines comprennent chacune au moins une spire de maintien supplémentaire (S1, S1', S2, S2').

6. Rotor (1) selon la revendication 5 dans lequel la, au moins une, spire de maintien supplémentaire (S1, S1', S2, S2') d'au moins une série de bobines est réalisée entre une pluralité de bras (B1...B18) dont l'un au moins est un bras autour duquel est enroulée la dernière bobine (C9, C9', C9", C9'") de la série et l'un au moins est un bras autour duquel est enroulée la dernière bobine (C9, C9') de l'autre série de bobines, la, au moins une, spire de maintien supplémentaire (S1, S1', S2, S2') des séries de bobines recouvrant partiellement les spires des dernières bobines (C9, C9', C9", C9'") des séries de bobines.

7. Rotor (1) selon l'une des revendications précédentes dans lequel la, au moins une, spire de maintien supplémentaire (S1, S1', S2, S2') s'étend dans une direction sensiblement égal à un angle de 360° divisé par le nombre de pôles de la machine tournante par rapport à la direction des spires de la dernière bobine d'une série.

8. Rotor (1) selon l'une des revendications précédentes configuré pour coopérer avec un stator de la machine électrique tournante comprenant un nombre de pôles supérieur ou égal à quatre.

9. Rotor (1) selon la revendication 8 dans lequel l'angle couvert par les bras (B1...B18) autour desquels est enroulée une bobine (C1...C9, C1'...C9', C1"...C9", C1'"...C9'") est sensiblement égal à 360° divisé par le nombre de pôles du stator de la machine électrique tournante.

10. Rotor (1) selon la revendication 1 comprenant un collecteur (11) muni d'une pluralité de bornes (V1...V18) et configuré pour alimenter les bobines (C1...C9'") du rotor (1) et dans lequel la boucle de maintien supplémentaire est un fil de liaison (L1') entre deux bornes du collecteur (11).

11. Procédé de fabrication d'un rotor (1) de machine électrique tournante comprenant un corps (3) comprenant une âme centrale cylindrique (5) et une alternance circonférentielle de bras (B1...B18) s'étendant radialement à partir de l'âme centrale cylindrique (5), le corps (3) étant destiné à être monté mobile autour d'un axe de rotation X, le procédé comprenant :
- une succession d'étapes (102...110, 102'...110') d'enroulement d'un nombre prédéterminé de spires d'un bobinage autour d'au moins deux bras (B1...B18) du corps (3) pour former au moins une série de bobines (C1...C9, C1'...C9', C1"...C9", C1'"...C9'"), les étapes d'enroulement étant réalisées de sorte que deux bobines adjacentes d'une série sont enroulées autour d'au moins un bras (B1...B18) commun et d'au moins un bras (B1...B18) distinct, deux bobines adjacentes d'une série étant décalées angulairement l'une par rapport à l'autre avec un recouvrement partiel,
- une étape supplémentaire (111, 111') d'enroulement d'au moins une spire supplémentaire de maintien (S1, S1', S2, S2') du bobinage autour d'au moins deux bras (B1...B18) du corps (3) dont au moins l'un des bras (B1...B18) est commun avec les bras (B1...B18) autour desquels est enroulée la dernière bobine (C9, C9') d'une série, située radialement le plus à l'extérieur, et l'autre bras (B1...B18) est distinct des bras (B1...B18) autour desquels est enroulée la dernière bobine (C9, C9', C9", 9"') d'une série, ladite, au moins une, spire de maintien supplémentaire (S1, S1', S2, S2') recouvrant partiellement les spires de ladite dernière bobine (C9, C9', C9", C9'").

12. Procédé de fabrication selon la revendication 11 dans lequel les étapes successives d'enroulement sont réalisées en double et simultanément à un premier emplacement du corps (3) et à un deuxième emplacement du corps diamétralement opposé au premier emplacement de manière à former deux séries de bobines symétriques par rapport à l'axe de rotation X.
